# EUROPÄISCHE PATENTSCHRIFT

(11) **EP 2 564 692 B1**
(45) Veröffentlichungstag und Bekanntmachung des Hinweises auf die Patenterteilung: **20.06.2018**
(21) Anmeldenummer: 11179800.5
(22) Anmeldetag: 02.09.2011
(51) Int. Cl.: A01K 15/02

(54) **Wirtschaftliches System zur Messung der freiwilligen Laufleistung von Mäusen**
Cost-effective system for measuring the voluntary distance travelled by mice
Système économique destiné à mesurer la distance parcourue volontairement par les souris

(43) Veröffentlichungstag der Anmeldung: 06.03.2013
(73) Patentinhaber: Preclinics Gesellschaft für präklinische Forschung mbH, 14482 Potsdam (DE)
(72) Erfinder: Füner, Jonas, 14473 Potsdam (DE); Odau, Simone, 14129 Berlin (DE)
(74) Vertreter: Hertin und Partner Rechts- und Patentanwälte PartG mbB

(56) Entgegenhaltungen:
- DE-A1- 19 826 441
- DE-U1-202009 017 570
- GB-A- 2 329 569
- JP-A- 2006 349 654

## Beschreibung

Die Erfindung betrifft eine Käfiganlage umfassend mindestens eine Laufradanlage (siehe z.B. JP 2006 349654 A). Dabei ist das Achslager sowie die Messeinrichtung außerhalb des Käfigs angeordnet, während das Laufrad sich innerhalb des Käfigs befindet. Die Welle, welche Laufrad und Achslager verbindet, wird durch eine Öffnung im Käfig, bevorzugt eine Trinknippelöffnung geführt.

### Hintergrund

Die Messung der freiwilligen Laufleistung von Kleinnagern, vor allem Mäusen ist ein bedeutender Parameter für die biologische und pharmazeutische Forschung.

Mäuse zeigen eine hohe und regelmäßige Laufaktivität, wenn man Ihnen ein Laufrad im Käfig anbietet. Die tägliche Laufleistung liegt bei ca. 14 km, wobei diese von dem jeweiligen Mausstamm und den verwendeten Geräten abhängt. Die Laufradaktivität wird außerdem durch den Hell/Dunkel-Zyklus beeinflusst. Mit Beginn der Dunkelphase fangen die Mäuse an im Laufrad zu laufen und halten in den ersten Stunden der Dunkelphase die Laufleistung konstant auf dem höchsten Niveau. Nach einigen Stunden beginnen die Tiere Pausen einzulegen und die Laufaktivität variiert stark zwischen den Tieren und den einzelnen Zeitabschnitten.

Die freiwillige Laufleistung wurde in der Vergangenheit oft genutzt, um die Wirkung des Laufens auf physiologische, anatomische sowie pathologische Parameter zu untersuchen. Hierbei wurde zwischen laufenden und nicht-laufenden Tieren verglichen. Hierdurch wurde eine Vielzahl von bemerkenswerten Auswirkungen des freiwilligen Laufens auf das Nervensystem, die Gefäße und das Immunsystem festgestellt.

In neuerer Zeit wird die freiwillige Laufleistung zunehmend auch für die pharmakologische Prüfung eingesetzt. Hierbei wird entweder der direkte Einfluss einer Substanz auf die Laufleistung untersucht (z.B. Sedativa, Amphetamine, Muskelrelaxantien) oder es wird ein Krankheitsmodell etabliert, welches sich in der Zu- oder Abnahme der Laufleistung auswirkt (z.B. rheumatoide Arthritis, Muskelischaemie oder Experimental Allergic Encephalitis). Der therapeutische Effekt wird dann anhand der Normalisierung der Laufleistung gemessen.

Außerdem kann das Laufverhalten ein wichtiger Parameter in der pharmakologischtoxikologischen Prüfung werden. Da die Beurteilung des Gesundheitsstatus und des Wohlbefindens der Tiere sehr subjektiv ist, ist die Anwendung des Laufrads eine sehr gute Ergänzung, die eine Quantifizierung des Wohlbefindens der Tiere ermöglicht.

Mit den derzeitigen auf den Markt erhältlichen Lösungen ist es jedoch schwierig große Gruppen an Tieren zu untersuchen. Solche großen Gruppen sind aber für die pharmakologische und toxikologische Forschung zwingend notwendig. Die angebotenen Systeme sind sehr aufwendig in der Handhabung und daher personalintensiv. Weiterhin sind die Herstellungs- und Anschaffungskosten sehr hoch. Außerdem nehmen die herkömmlichen Laufradanlagen viel Platz ein und können daher nicht platzsparend untergebracht werden. Verursacht werden die Probleme durch die Unterbringung des Lagers der Radachse innerhalb des Käfigs. Hierdurch wird es notwendig einen großen Käfigtyp zu wählen und das Achslager und die Elektronik zum Messen der Umdrehungen vor der Zerstörung durch die Tiere zu schützen.

Die Reinigung und Sterilisation des Käfigs sind wichtig in Versuchstierhaltungen. Daher ist eine gute Handhabung des Systems entscheidend für den Personalaufwand. Bei vielen auf den Markt erhältlichen Systemen ist es nicht möglich die Käfiganlagen zu autoklavieren, da sich elektronische Bauteile oder Bauteile aus thermolabilem Kunststoff in den Käfigen bzw. Laufradanlagen befinden.

Komplexe Einbauten in den Versuchstierkäfigen erhöhen den Personalbedarf enorm, da bei der Handhabung der Käfige das Pflegepersonal auf die Mäuse achten muss, welche bei den regelmäßigen Reinigungen nervös reagieren. Hieraus ergibt sich eine Verletzungsgefahr für die Tiere, da diese versuchen entweder zu flüchten oder sich zu verstecken. Bei komplexen Einbauten kommt es immer wieder zu Verletzungen durch Quetschungen bei der Reinigung und dem Wechsel der Käfige.

Ein weiterer wichtiger Aspekt ist die gute Einsehbarkeit der Versuchstierkäfige, da die Versuchstiere häufig und regelmäßig kontrolliert werden müssen. Die Maus muss daher im Käfig gut sichtbar sein, damit jederzeit der Gesundheitszustand kontrolliert werden kann.

Tierhaltungsräume sind technisch aufwendig gestaltet, sodass die derzeitigen Raumkosten etwa bei 40 € pro m² im Monat liegen. Aus diesem Grund ist es von Vorteil, wenn die Versuchstiere möglichst platzsparend untergebracht werden können, um so die Kosten gering zu halten. Die Käfiganlagen im Stand der Technik genügen dieser Anforderung nur unzureichend.

Diese beschriebenen Nachteile führen zu einer Zurückhaltung beim Einsatz von Laufrädern zur Messung der freiwilligen Laufleistung von Versuchsmäusen.

### Spezieller Beschreibungsteil

Es war daher die Aufgabe der Erfindung, eine Laufradanlage bereitzustellen, mit welcher die Messung der freiwilligen Laufleistung von Mäusen in einem großen Maßstab durchgeführt werden können, unter Berücksichtigung der speziellen Anforderungen einer Versuchstierhaltung an Hygiene und Tierpflege, wobei die Nachteile des Standes der Technik überwunden werden.

Die Erfindung betrifft eine Käfiganlage umfassend eine Laufradanlage umfassend mindestens ein Laufrad, eine Welle, ein Achslager und eine Messeinrichtung, dadurch gekennzeichnet, dass die Welle derart gestaltet ist, dass sie durch eine Öffnung, bevorzugt die Trinknippelöffnung, in einen Kleintierkäfig geführt werden kann

Durch diese Gestaltung der Welle ist es möglich die Laufradanlage so mit einem Käfig zu verbinden, dass das Laufrad im Inneren des Käfigs angebracht werden kann, während das Achslager sich außerhalb des Käfigs befindet.

Die Laufradanlage im Sinne der Erfindung eignet sich vor allem für Kleinnager, wie Ratten, Hamster oder Mäuse. Grundsätzlich kann eine Laufradanlage im Sinne der Erfindung jedoch für jede Tierart verwendet werden, deren Laufleistung untersucht werden soll. Die Größe des eingesetzten Laufrades hängt dabei von der Tiergröße und der durchschnittlichen Laufgeschwindigkeit der Tiere ab.

Grundsätzlich kann diese Anlage mit jeder Art von Käfig verbunden werden. Hierfür wird die Welle durch eine Öffnung im Käfiggehäuse geführt. Es kann entweder eine bereits vorhandene Öffnung verwendet werden oder es wird eine passende Öffnung hergestellt. Das Laufrad wird dann im Inneren des Käfigs, bevorzugt an einer Seitenwand angeordnet, während das Achslager und die Messeinrichtung außerhalb des Käfigs verbleiben.

Durch die Entfernung des Achslagers aus dem Versuchstierkäfig können viele Vorteile erzielt werde. Besonders vorteilhaft ist das verringerte Verletzungsrisiko. Durch die Entfernung des Achslagers und der Messeinrichtung sind weniger Gefahrenquellen für die Tiere in den Käfigen vorhanden. Ein geringes Verletzungsrisiko ist von großer Bedeutung, da die gemessenen Parameter durch Verletzungen der Tiere beeinflusst werden, da sich Verletzungen negativ auf die freiwillige Laufleistung der Tiere auswirken. Die Laufradanlage im Sinne der Erfindung ist daher vorteilhaft gegenüber Laufradanlagen im Stand der Technik, da exaktere und unverfälschte Messwerte erhalten werden. Die Laufradanlagen können daher besonders gut zur Bestimmung der Laufleistung von Versuchstieren, speziell von Mäusen, für wissenschaftliche Studien eingesetzt werden und tragen durch die geringe Kosten zur Wirtschaftlichkeit dieser Versuche bei. Außerdem lassen sich die Käfige leichter und effektiver reinigen.

In einer weiteren bevorzugten Ausführungsform ist die Messeinrichtung ein Drehzahlmesser. Über die Zahl der gemachten Umdrehungen lässt sich die Laufleistung der Tiere am einfachsten bestimmen. Je nach Fragestellung kann auch die Geschwindigkeit relevant sein, sodass die die Umdrehungszahl pro Zeiteinheit von der Messeinheit bestimmt wird.

In einer anderen bevorzugten Ausführungsform weist die Messeinrichtung eine Verbindung zu einer Auswerteeinheit auf. Durch diese Ausführungsform ist es möglich, die Rohdaten auf einfache Weise direkt auszuwerten und aufzuarbeiten. Somit können die Werte schnell und einfach mit einander verglichen werden und erste Aussagen über die Laufleistung können direkt abgelesen werden.

Außerdem bevorzugt ist, dass die Welle aus Metall, bevorzugt Edelstahl gefertigt ist. Dadurch wird zum einen eine lange Haltbarkeit der Materialien garantiert, zum anderen sind Wellen aus Metall bzw. Edelstahl besonders gut zu reinigen, sodass die Laufradanlage hygienischer gehalten werden kann. Durch das leichte und effektive Desinfizieren der Welle können Erkrankungen der Tiere minimiert werden, was wiederum zu aussagekräftigeren Versuchsergebnissen führt.

Es ist weiterhin bevorzugt, dass das Laufrad aus Metall und/oder Kunststoff, bevorzugt thermostabilem Kunststoff, gefertigt ist. Diese Materialien sind gut zu reinigen und sind besonders haltbar, auch unter ständiger Belastung durch die Laufleistung der Tiere. Außerdem hat sich gezeigt, dass Tiere diese Materialen gut annehmen und nicht annagen oder als Fremdkörper behandeln. Laufräder aus diesen Materialien sind spülmaschinenfest und autoklavierbar, was zu einer schnellen, sichern und wenig zeitintensiven Reinigung beiträgt.

In einer weiteren bevorzugten Ausführungsform ist die Welle mit dem Laufrad mittels einer Schnapp- und/oder Steckverbindungen verbindbar. Durch diese Ausführungsform ist es möglich, das Laufrad schnell und auf einfache Weise von der restlichen Laufradanlage zu trennen. Das schnelle Montieren und Demontieren verringert den Zeitaufwand bei der Reinigung der Käfige erheblich. Erfindungsgemäß umfasst die Laufradanlage zusätzlich einen Motor, bevorzugt einen Elektromotor, besonders bevorzugt einen bürstenloser Gleichstrommotor ; das Lager des Motors ist das Achslager der Laufradanlage. Hierbei ist der Einsatz von Gleichstrommotoren besonders vorteilhaft. Durch die Magnete im Gleichstrommotor entsteht ein Haltemoment, welches den Leerlauf des Rades, nach dem das Tier das Laufrad verlassen hat, reduziert. Weiterhin kann durch das Anlegen einer Spannung mittels elektromagnetischer Induktion eine Bremswirkung hervorgerufen werden, welche sich fein dosieren lässt und eine hohe Reproduzierbarkeit gewährleistet. Ebenso kann das Laufrad mittels einer Spannung durch den Motor blockiert werden, sodass sich die Laufleistung reglementieren lässt.

Vorzugsweise werden bürstenlose Gleichstrommotoren mit Positionssensoren verwendet, da so die Laufleistung direkt durch die Positionssensoren des Motors ermittelt werden kann. Weiterhin können bei bürstenlosen Motoren keine Unterschiede im Haltemoment durch das unterschiedliche Abnutzen der Bürsten entstehen.

Durch die Verwendung eines Motors ist es möglich, die Laufräder sowohl als "aktive" Laufräder, das heißt als Laufräder die durch das Versuchstier in Bewegung gesetzt werden, und als "passive" Laufräder, das heißt als Laufräder die über einen Motor angetrieben werden, zu betreiben. Mit aktiven Laufrädern wird in erste Linie die freiwillige Laufleistung der Versuchstiere gemessen, während mit passiven Laufrädern Versuchstiere dazu animiert bzw. gezwungen werden eine definierte Strecke in einem vorgegebenen Zeit zurückzulegen. Durch den Motor kann die Welle angetrieben werden, sodass die Laufradanlage als passives Laufrad eingesetzt werden kann. Die Erfindung gemäß Anspruch 1 betrifft eine Käfiganlage umfassend mindestens eine Laufradanlage und mindestens einen Käfig, wobei das Achslager und die Messeinrichtung einer Laufradanlage außerhalb eines Käfigs angeordnet sind und die Welle das Laufrad über das Achslager mit der Messeinrichtung verbindet, wobei das Laufrad innerhalb des Käfigs angeordnet ist.

Durch die Erfindung konnten das Achslager und die Messeinrichtung aus dem Versuchstierkäfig entfernt werden, wodurch die bereits beschriebenen Vorteile bezüglich der Hygiene und der Personalkosten erzielt werden konnten. Außerdem birgt die Unterbringung des Achslagers und/oder der Messeinrichtung immer auch ein Verletzungsrisiko für die Tiere.

Es hat sich gezeigt, dass die Tiere durch zusätzliche Geräte innerhalb ihres Käfigs schneller nervös werden, was sich auf die Versuchsergebnisse auswirken kann. Es ist daher wünschenswert, möglichst wenig Zubehör im Inneren des Käfigs aufzubewahren.

Außerdem lässt sich durch die Anordnung im Sinne der Erfindung nicht nur die Laufradanlage schneller und einfacher reinigen, sondern auch der Käfig. Dies hat nicht nur Vorteile in hygienischer Sicht, sondern schont außerdem die Tiere. Durch das Reinigen werden die Tiere nervös und es kann leichter zu Verletzungen der Tiere aber auch des Personals, beispielsweise durch Bisse, kommen. Durch den einfachen Aufbau innerhalb des Käfigs, wird dieses Risiko nun minimiert. Die Tiere haben weniger Streß, welcher sich nachteilig auf die Versuche auswirkt.

Es ist bevorzugt, dass der Käfig ein Makrolonkäfige ist. Ein Vorteil der Erfindung ist, dass Standardkäfige für die Käfiganlagen verwendet werden können. Somit können auch einfache Käfige mit den Laufradanlagen aufgerüstet werden, ohne dass die komplette Käfiganlage neu gekauft werden müsste. Hierdurch können erhebliche Kosten eingespart werden.

Standardmakrolonkäfige gibt es mit einer Öffnung für Trinknippel von automatischen Tränkanlagen. Solche Käfige können von unterschiedlichen Herstellern bezogen werden. Es können auch andere Käfige verwendet werden, sofern diese eine Öffnung aufweisen. Andernfalls kann diese Öffnung auch nachgerüstet werden, bzw. vorhandene Öffnungen können entsprechend vergrößert werden. Durch eine Öffnung zur Aufnahme der Welle ist es ohne besonderen Aufwand möglich, das Achslager außerhalb des Käfigs anzuordnen, während das Laufrad sich im Inneren des Käfigs befindet.

Ein weiterer Vorteil der Verwendung von Standardkäfigen liegt darin, dass kein eigenes Zubehör angeschafft werden muss, sondern das vorhandene Zubehör weiter verwendet werden kann.

Besonders bevorzugt ist, dass die Trinknippelöffnung des Käfigs als Öffnung zur Aufnahme der Welle dient. Da Standardkäfige auch mit einer Öffnung zum Einführen der Trinknippel von automatischen Tränken angeboten werden, ist es besonders vorteilhaft diese bereits vorhandene Öffnung zum Einführen der Welle zu verwenden. Auf diese Weise ist es besonders einfach und zeitsparend möglich Standardkäfige mit den Laufradanlagen zu kombinieren.

Wenn Käfige ohne bereits vorhandene Öffnungen verwendet werden sollen, können die Öffnungen problemlos nachträglich eingefügt werden. In jedem Fall können die vorhandenen Käfigdeckel verwendet werden, welche in der Neuanschaffung hohe Investitionskosten verursachen würden.

In einer weiteren bevorzugten Ausführungsform betrifft die Erfindung die Käfiganlage, dadurch gekennzeichnet, dass das Achslager und die Messeinrichtung einer Laufradanlage in einem Geräteschacht angeordnet sind.

Diese Ausführungsform eignet sich besonders gut für Versuchsaufbauten, die eine große Zahl von Versuchstieren erfordern. Durch den Geräteschacht lassen sich die Messeinrichtungen und die Achslager sicher und platzsparend verstauen, ohne dass sie bei den täglichen Arbeiten des Personals, wie Reinigen, Futter und Wasser nachfüllen oder Kontrolle der Tiere stören.

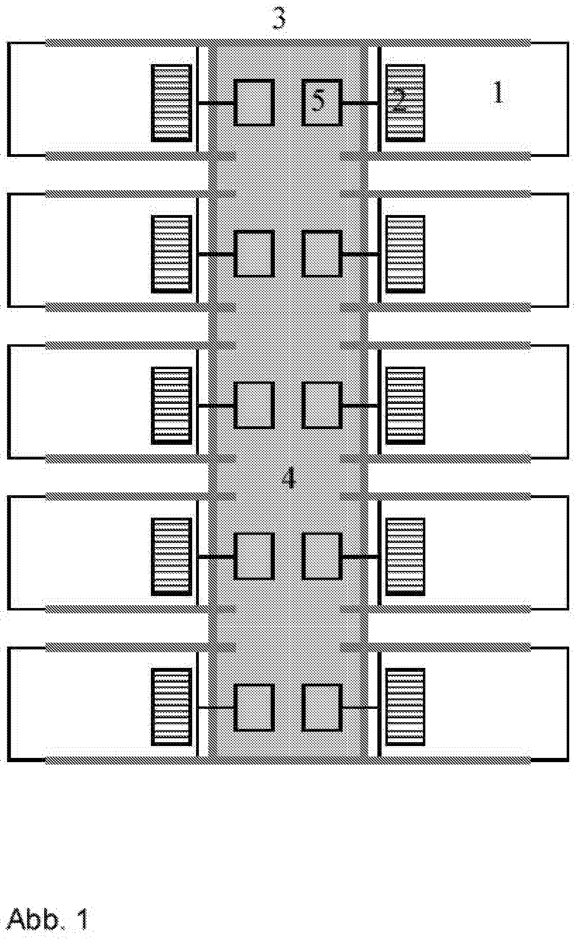

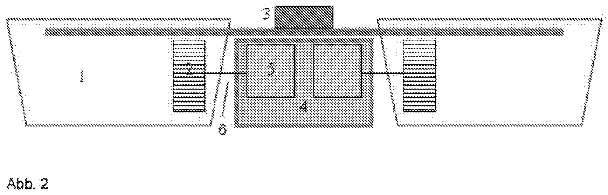

Es ist außerdem bevorzugt, dass mindestens zwei Achsenlager und mindestens zwei Messeinrichtungen in demselben Geräteschacht angeordnet sind (vgl. auch Abb. 1 und 2). Hierbei werden die Käfiganlagen bevorzugt so ausgerichtet, dass der Geräteschacht zwischen zwei Käfigen angeordnet ist. Diese Anordnung ist platzsparend und ermöglicht eine sichere Anordnung der Käfige. Die Käfige können dabei außerdem so angeordnet werden, dass die Tiere nicht unmittelbar nebeneinander gehalten werden und kein Sichtkontakt zwischen den Tieren besteht. Dies kann für bestimmte Fragestellungen von Bedeutung sein.

Es hat sich als vorteilhaft erwiesen, dass der Geräteschacht in einem Regalsystem angeordnet ist. Außerdem gewährleisten die Regalsysteme der Erfindung eine platzsparende Unterbringung einer großen Zahl von Versuchstieren. Da die Raumkosten für Versuchstierräume hoch sind, bedeutet eine Platzeinsparung auch immer eine Kostenersparnis, welche sich positiv auf die Wirtschaftlichkeit der Versuche auswirkt.

Es ist dabei vorteilhaft, dass das Achslager an das Regal angebracht wird, da sich die Anlagen so besonders gut verstauen und befestigen lassen. Hierdurch wird zusätzliche Stabilität gewonnen, welche besonders wichtig ist, wenn mehrere Käfige in einem Regal untergebracht werden. Durch die Laufbewegung der Tiere können die Käfige sich sonst bewegen und unter Umständen aus dem Regal fallen.

Außerdem bevorzugt ist, dass das Regalsystem mindestens ein Aufnahmemittel zur reversiblen Befestigung mindestens eines Käfigs umfasst. Somit ist es möglich, die Käfige sicher und standfest in dem Regal anzuordnen.

Es ist des Weiteren möglich, die Käfiganlagen in Schränken anzuordnen bzw. die Regale mit Türen zu versehen. Durch einen solchen Aufbau können die Versuchstiere ohne großen Aufwand in unterschiedliche Gruppen eingeteilt werden und unterschiedlichen Hell-/Dunkel-Zyklen ausgesetzt werden. Die Erfindung betrifft auch die Verwendung gemäß Anspruch 12 einer Käfiganlage im Sinne der Erfindung zur Messung der freiwilligen Laufleistung von Kleintieren.

Es ist bevorzugt, dass die Umdrehungszahl pro Zeiteinheit bestimmt wird. So kann neben der zurückgelegten Stecke auch die Geschwindigkeit bestimmt und ausgewertet werden. Die anmeldungsgemäße Lehre zeichnet sich außerdem durch folgende Merkmale aus:
- Vorliegen eines seit langem ungelösten dringenden Bedürfnisses für die Lösung des mit der Erfindung gelösten Problems
- die Einfachheit der Lösung spricht für erfinderische Tätigkeit, insbesondere da sie kompliziertere Lehren ersetzt
- technischer Fortschritt: Verbesserung, Leistungssteigerung, Verbilligung, Ersparnis an Zeit, Material, Arbeitsstufen, erhöhte Zuverlässigkeit, Beseitigung von Fehlern, Qualitätshebung, Wartungsfreiheit und größere Effektivität
- wirtschaftlicher Erfolg.

Insbesondere die vorteilhaften Ausführungsformen der Erfindung weisen mindestens einen oder mehrere der genannten Vorteile auf.

### Figuren

Die Erfindung wird nunmehr anhand der Figuren beispielhaft beschrieben, ohne dass diese jedoch den Schutzumfang der Erfindung einschränken:
- Abbildung 1: Draufsicht
- Abbildung 2: Seitenansicht

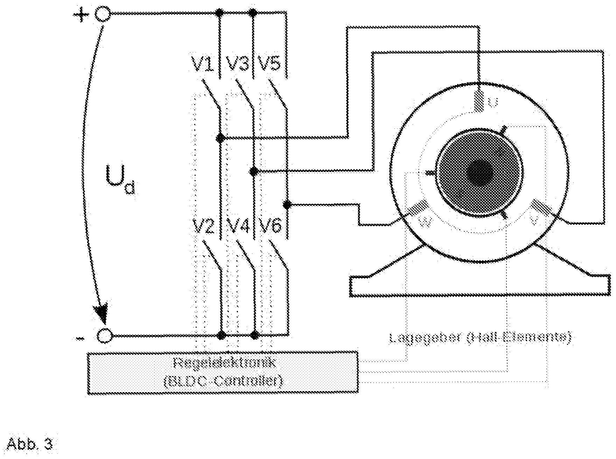

- Abbildung 3: Skizze bürstenloser Gleichstrommotor (BLDC)

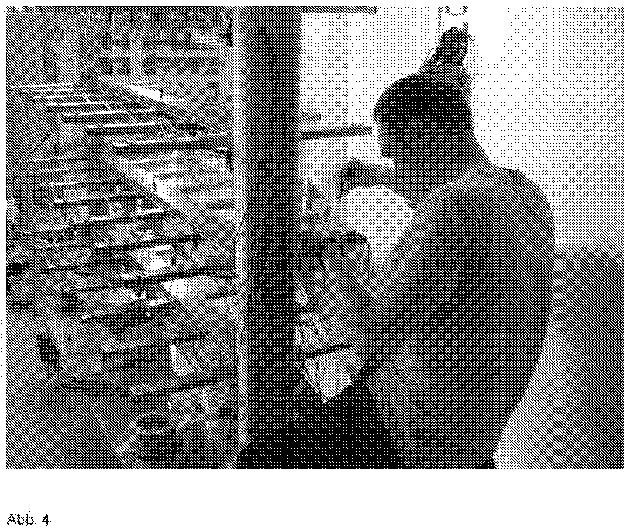

- Abbildung 4: Kabelmontage

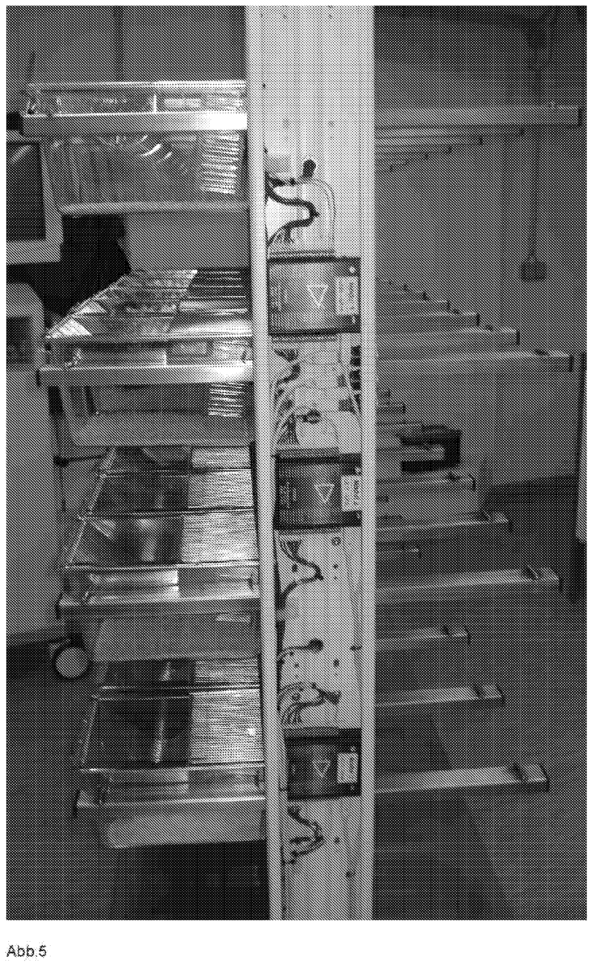

- Abbildung 5: Anordnung USB-Messmodule

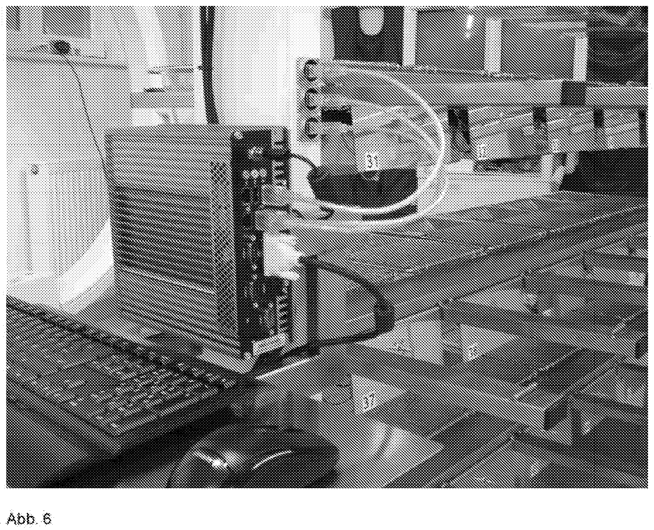

- Abbildung 6: Detail: PC und Einschübe mit Achsen

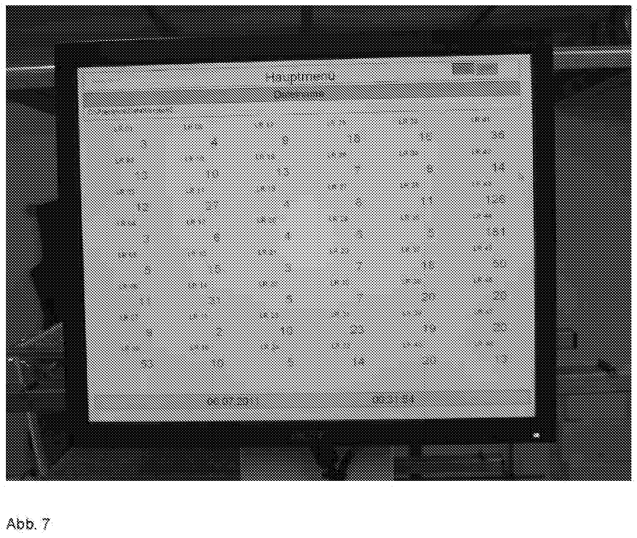

- Abbildung 7: Monitor während der Datenaufzeichnung

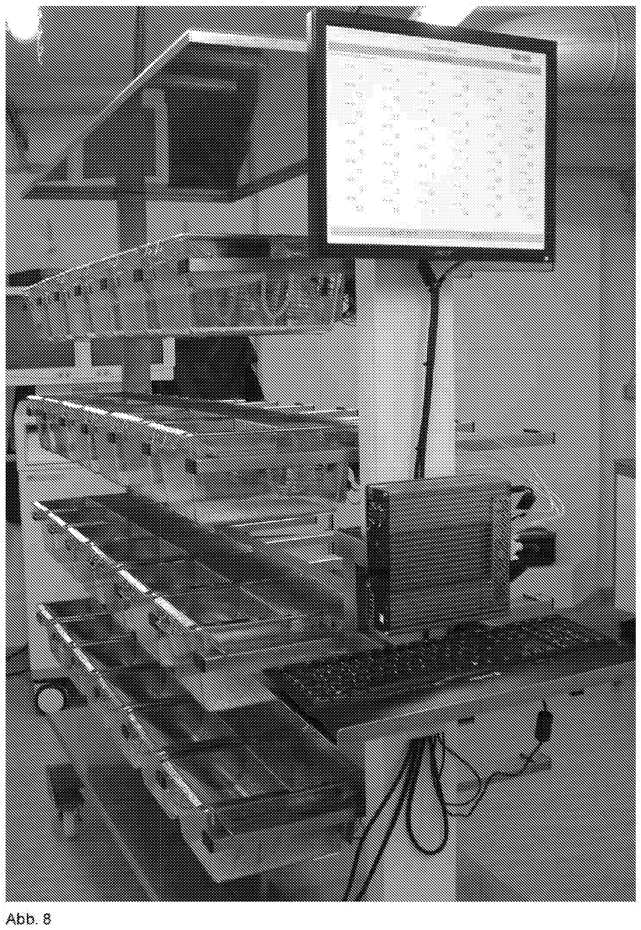

- Abbildung 8: Bestücktes System

### Ausführungsbeispiele

Die Erfindung wird nunmehr anhand von folgenden Ausführungsbeispielen beispielhaft beschrieben, ohne dass diese jedoch den Schutzumfang der Erfindung einschränken:
Revolyzer 3 stellt ein Beispiel der erfindungsgemäßen Laufradanlage dar.

Der REVOLYZER 3 ist eine Anlage zur Messung der freiwilligen Laufleistung von Mäusen und Zwerghamstern. Er umfasst 48 Laufradplätze. Das System wird mit Makrolon Typ II Käfigen bestückt, welche über eine Trinknippelöffnung verfügen. Jeder Käfig verfügt über ein Laufrad, welches über eine Achse mit dem REVOLYZER 3 Gestell und der Messeinrichtung verbunden ist.

Die Umdrehungen werden mittels Hallsonden am Achslager erfasst. Durch einen bürstenlosen Gleichstrommotor als Achslager wird mittels Induktion der Leerlauf minimiert.

Die Messsignale der Hallsonden werden über 3 USB-Analog-Digital Messmodule erfasst und an einen an dem Gerät fest installierten PC übertragen. Die Messergebnisse werden mittels einer speziell konfigurierten Software erfasst und auf dem Bildschirm angezeigt. Jede Minute werden die Ergebnisse in eine Tabelle geschrieben. Die Tabellendatei kann dann in unterschiedliche Programme zur weiteren Auswertung exportiert werden.

### Achslager:

BLDC Motor (Fa. Nanotec Electronic GmbH & Co. KG, Modell DB28S01)

### USB-Messmodul:

16-Kanal USB-Multifunktionsmodul (Fa. Data Translation GmbH, Modell DT9813)

### Software:

Dasylab11 (Measurement Computing USA)

### Rechner:

lüfterloser Industrie PC (spo-comm GmbH, Modell: spo-book NOVA GM45)

### Laufräder:

eigene Konstruktion (Makrolon Rahmen und Edelstahlsprossen)

### Käfige:

Makrolon Typ II

### Bezugszeichen

1 = Käfig
2 = Laufrad
3 = Gestell
4 = Geräteschacht
5 = Achsenlager und Messeinrichtung
6 = Welle

## Patentansprüche

1. Käfiganlage umfassend
mindestens einen Käfig (1), wobei der Käfig mindestens eine Öffnung zur Aufnahme einer Welle aufweist und
mindestens eine Laufradanlage, wobei die Laufradanlage mindestens ein Laufrad (2), eine Welle (6), ein Achslager (5) und eine Messeinrichtung (5) umfasst, wobei die Messeinrichtung außerhalb des Käfigs angeordnet ist und die Welle das Laufrad über das Achslager mit der Messeinrichtung verbindet, wobei das Laufrad innerhalb des Käfigs angeordnet ist, wobei das Achslager außerhalb des Käfigs angeordnet ist und die Laufradanlage zusätzlich einen Motor, bevorzugt einen Elektromotor, besonders bevorzugt einen bürstenlosen Gleichstrommotor umfasst und das Lager des Motors das Achslager ist und die Welle derart gestaltet ist, dass sie durch die Öffnung in den Kleintierkäfig geführt werden kann.

2. Käfiganlage nach Anspruch 1, **dadurch gekennzeichnet, dass**
mindestens ein Käfig ein Makrolonkäfig ist und/oder die Öffnung zur Aufnahme der Welle eine Trinknippelöffnung ist.

3. Käfiganlage nach Anspruch 1 oder 2, **dadurch gekennzeichnet, dass**
das Achslager und die Messeinrichtung einer Laufradanlage in einem Geräteschacht angeordnet sind.

4. Käfiganlage nach mindestens einem der vorherigen Ansprüche, **dadurch gekennzeichnet, dass** die Messeinrichtung ein Drehzahlmesser ist.

5. Käfiganlage nach mindestens einem der vorherigen Ansprüche, **dadurch gekennzeichnet, dass** die Messeinrichtung eine Verbindung zu einer Auswerteeinheit aufweist.

6. Käfiganlage nach mindestens einem der vorherigen Ansprüche, **dadurch gekennzeichnet, dass** die Welle aus Metall, bevorzugt Edelstahl gefertigt ist.

7. Käfiganlage nach mindestens einem der vorherigen Ansprüche, **dadurch gekennzeichnet, dass** das Laufrad aus Metall und/oder Kunststoff, bevorzugt thermostabilem Kunststoff gefertigt ist.

8. Käfiganlage nach mindestens einem der vorherigen Ansprüche, **dadurch gekennzeichnet, dass** die Welle mit dem Laufrad mittels einer Schnapp- und/oder Steckverbindungen verbindbar ist.

9. Käfiganlage nach mindestens einem der vorherigen Ansprüche, **dadurch gekennzeichnet, dass** mindestens zwei Achsenlager und mindestens zwei Messeinrichtungen in demselben Geräteschacht angeordnet sind.

10. Käfiganlage nach mindestens einem der vorherigen Ansprüche, **dadurch gekennzeichnet, dass** der Geräteschacht in einem Regalsystem angeordnet ist.

11. Käfiganlage nach mindestens einem der vorherigen Ansprüche, **dadurch gekennzeichnet, dass** das Regalsystem Aufnahmemittel zur reversiblen Befestigung mindestens eines Käfigs umfasst.

12. Verwendung einer Käfiganlage nach mindestens einem der Ansprüche 1 bis 11 zur Messung der freiwilligen Laufleistung von Kleintieren.

13. Verwendung nach Anspruch 12, wobei die Umdrehungszahl des Laufrades über die Welle von der Messeinrichtung ermittelt und an eine Auswerteeinheit geleitet wird und die Umdrehungszahl pro Zeiteinheit bestimmt wird.

## Claims

1. A cage system, including
at least one cage (1),
wherein the cage comprises at least one opening for receiving a shaft and
at least one exercise wheel arrangement, wherein the exercise wheel arrangement includes at least one exercise wheel (2), one shaft (6), one axle bearing (5), and one measuring device (5), wherein the measuring device is disposed outside the cage and the shaft connects the exercise wheel via the axle bearing with the measuring device, wherein the exercise wheel is disposed inside the cage, wherein the axle bearing is disposed outside the cage and the exercise wheel arrangement additionally includes a motor, preferably an electric motor, particularly preferably a brushless direct current motor, and the bearing of the motor is the axle bearing and the shaft is configured such that it can be guided through the opening into the cage for small animals.

2. The cage system according to claim 1, **characterized in that** at least one cage is a Makrolon cage and/or the opening for receiving the shaft is a nipple drinker opening.

3. The cage system according to claim 1 or 2, **characterized in that** the axle bearing and the measuring device of an exercise wheel arrangement are disposed in an equipment bay.

4. The cage system according to at least one of the preceding claims, **characterized in that** the measuring device is a tachometer.

5. The cage system according to at least one of the preceding claims, **characterized in that** the measuring device has a connection to an evaluation unit.

6. The cage system according to at least one of the preceding claims, **characterized in that** the shaft is made of metal, preferably of stainless steel.

7. The cage system according to at least one of the preceding claims, **characterized in that** the exercise wheel is made of metal and/or plastic, preferably of thermostable plastic.

8. The cage system according to at least one of the preceding claims, **characterized in that** the shaft can be connected to the exercise wheel using a snap-in and/or plug-in connection.

9. The cage system according to at least one of the preceding claims, **characterized in that** at least two axle bearings and at least two measuring devices are disposed in the same equipment bay.

10. The cage system according to at least one of the preceding claims, **characterized in that** the equipment bay is disposed in a shelf system.

11. The cage system according to at least one of the preceding claims, **characterized in that** the shelf system includes receiving means for reversible fastening of at least one cage.

12. A use of a cage system according to at least one of claims 1 to 11 for measuring the voluntary running performance of small animals.

13. The use according to claim 12, wherein the rotational speed of the exercise wheel is determined via the shaft by the measuring device and sent to an evaluation unit, and the rotational speed per time unit is determined.

## Revendications

1. Système de cage comprenant
au moins une cage (1),
la cage présentant au moins une ouverture destinée à recevoir un arbre et
au moins un dispositif de roue de roulement, le dispositif de roue de roulement comprenant au moins une roue de roulement (2), un
arbre (6), un palier d'essieu (5)
et un dispositif de mesure (5), le dispositif de mesure étant disposé en dehors de la cage et l'arbre joignant la roue de roulement au dispositif de mesure par le palier d'essieu, la roue de roulement étant située à l'intérieur de la cage,
le palier d'essieu étant situé à l'extérieur de la cage et le dispositif de roue de roulement comprenant un moteur, de préférence un moteur électrique, plus spécialement un moteur à courant continu sans balais et le palier du moteur étant le palier d'essieu et l'arbre étant formé de telle sorte qu'il puisse être inséré dans la cage pour petits animaux par l'ouverture.

2. Système de cage selon la revendication 1, **caractérisé en ce qu'**au moins une cage est une cage Makrolon et/ou l'ouverture destinée à recevoir l'arbre est une ouverture d'abreuvoir par pipette.

3. Système de cage selon la revendication 1 ou 2, **caractérisé en ce que** le palier d'essieu et le dispositif de mesure d'un dispositif de roue de roulement sont disposés dans un équipement.

4. Système de cage selon au moins une des revendications précédentes, **caractérisé en ce que** le dispositif de mesure est un compte-tours.

5. Système de cage selon au moins une des revendications précédentes, **caractérisé en ce que** le dispositif de mesure présente un raccord à une unité d'évaluation.

6. Système de cage selon au moins une des revendications précédentes, **caractérisé en ce que** l'arbre est fabriqué en métal, de préférence en acier inoxydable.

7. Système de cage selon au moins une des revendications précédentes, **caractérisé en ce que** la roue de roulement est fabriquée en métal et/ou en plastique, de préférence en plastique thermostable.

8. Système de cage selon au moins une des revendications précédentes, **caractérisé en ce que** l'arbre peut être raccordé à la roue de roulement au moyen d'un raccord par encliquetage et/ou enfichable.

9. Système de cage selon au moins une des revendications précédentes, **caractérisé en ce qu'**au moins deux paliers d'essieu et au moins deux dispositifs de mesure sont disposés dans le même équipement.

10. Système de cage selon au moins une des revendications précédentes, **caractérisé en ce que** l'équipement est disposé dans un système de rayonnage.

11. Système de cage selon au moins une des revendications précédentes, **caractérisé en ce que** le système de rayonnage comprend un moyen de réception pour la fixation réversible d'au moins une cage.

12. Utilisation d'un système de cage selon l'une quelconque des revendications 1 à 11 pour mesurer les performances kilométriques volontaires de petits animaux.

13. Utilisation selon la revendication 12, le nombre de tours de la roue de roulement étant déterminé par le dispositif de mesure sur l'arbre puis transmis à une unité d'évaluation et le nombre de tours par unité de temps est défini.
